(19) Europäisches Patentamt
European Patent Office
Office européen des brevets

(11) Veröffentlichungsnummer: **0 335 302 B1**

# (12) EUROPÄISCHE PATENTSCHRIFT

(45) Veröffentlichungstag der Patentschrift: **22.06.94**

(51) Int. Cl.$^{5}$: **G11B 7/00**, G11B 7/24

(21) Anmeldenummer: **89105387.8**

(22) Anmeldetag: **25.03.89**

## (54) Vorrichtung zur reversiblen optischen Datenspeicherung.

(30) Priorität: **30.03.88 DE 3810722**

(43) Veröffentlichungstag der Anmeldung:
**04.10.89 Patentblatt 89/40**

(45) Bekanntmachung des Hinweises auf die Patenterteilung:
**22.06.94 Patentblatt 94/25**

(84) Benannte Vertragsstaaten:
**AT BE CH DE ES FR GB IT LI NL SE**

(56) Entgegenhaltungen:
**EP-A- 0 194 798**
**EP-A- 0 231 856**
**EP-A- 0 231 857**
**EP-A- 0 232 964**
**US-A- 4 530 080**
**US-A- 4 551 819**
**US-A- 4 566 086**

**Dr. Otto-Albrecht Neumüller, "Römpps Chemie-Lexikon", 8. Auflage 1987, Franckh'sche Verlagsbuchhandlung Stuttgart, Band 5: Pl-S, S.3288-3289;**

**John D. Roberts und Marjorie C. Caserio, "Basic Principles of Organic Chemistry", Addison-Wesley 1977 (second edition), S.1429;**

(73) Patentinhaber: **RÖHM GMBH**
**Kirschenallee**
**D-64293 Darmstadt(DE)**

(72) Erfinder: **Eich, Manfred**
**Bockenheimer Landstrasse 7**
**D-6000 Frankfurt/M(DE)**
Erfinder: **Rau, Norbert, Dr.**
**Hohe Mark Weg 4**
**D-6231 Sulzbach(DE)**
Erfinder: **Wendorff, Joachim, Dr.**
**Reiherstrasse 18**
**D-6085 Nauheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gebiet der Erfindung

Die Erfindung betrifft eine Vorrichtung zur reversiblen optischen Datenspeicherung unter Verwendung von amorphen Polymeren im zähelastischen und im glasig erstarrten Zustand.

Stand der Technik

Neben dem festen kristallinen Zustand und dem flüssigen Schmelzezustand können polymere Systeme in einem begrenzten Temperaturbereich den hochviskosen, zähelastischen Zustand und bei tieferen Temperaturen den festen, glasig erstarrten Zustand aufweisen. Durch geeigneten chemischen Aufbau der Kettenmoleküle bzw. durch geeignete Einstellung der Kettenlänge der Moleküle kann die Tendenz zur Ausbildung dieser Zustände vestärkt werden. Die Tendenz zur Ausbildung der genannten Zustände ist gleichermaßen bei Homopolymeren, Copolymeren, verzweigten Polymeren und vernetzten Polymeren vorhanden. (Vgl. H.G. Elias, Makromoleküle, Hüthig u. Wepf Verlag Basel; B. Wunderlich, Macromolecular Physics, Academic Press, New York 1973).

Der Existenzbereich des glasig erstarrten Zustands läßt sich z.B. mittels kalorimetrischer oder dilatometrischer Untersuchungsmethoden charackterisieren: beim Übergang des Glases in den zähelastischen Zustand nimmt die spezifische Wärme und der thermische Ausdehnungskoeffizient sprunghaft zu. Der Existenzbereich des zähelastischen Zustands kann mittels rheologischer Methoden bzw. dynamisch-mechanischer Untersuchungsmethoden festgelegt werden. (Vgl. D.W. van Krevelen, Properties of Polymers, Elsevier Scientific Publishing Company, Amsterdam 1976, H.G. Elias, loc.cit; B. Wunderlich loc.cit).

Der zähelastische Zustand und der glasig erstarrte Zustand sind hinsichtlich ihrer Struktur im allgemeinen dadurch gekennzeichnet, daß keine periodische, kristallartige Anordnung der Molekülgruppen vorliegt und daß die Molekülgruppen eine statistische Orientierung aufweisen. Dies trifft zu, solange keine flüssigkristallinen Polymeren betrachtet werden und solange beim Abkühlen keine externen elektrischen, magnetischen oder mechanischen Felder auf die Systeme einwirken.

Die Orientierungsordnung des zähelastischen bzw. glasig erstarrten Zustandes läßt sich im einfachsten Fall mittels des Orientierungsordnungsparameters $f_\theta$ charakterisieren. (Vgl. P.G. de Gennes "The Physics of Liquid Crystals" Clarendon Press, Oxford 1974; W.H. De Jeu, Physical Properties of Liquid Crystalline Materials, Gordon and Breach Science Publishers 1980)
Der Orientierungsparameter ist dabei wie folgt definiert:

$$f_\theta = \tfrac{1}{2} < 3 \cos^2 \Theta - 1 >$$

wobei $\theta$ der Winkel zwischen der Längsachse der Molekülgruppe (Segment der Kette) und einer lokalen Vorzugsrichtung ist. Der Wert dieses Ordnungsparameters ist 1 für den Fall einer vollständigen, perfekten Parallel-Lagerung aller Molekülgruppen und Null für eine statistische Orientierungsverteilung. Dieser Wert wird im allgemeinen bei amorphen Polymeren für den zähelastischen und den glasartig erstarrten Zustand beobachtet und zwar homogen für die ganze Probe. (Vgl. F. Bueche, Physical Properties of Polymers, Interscience, New York 1962).

Berücksichtigt man ferner, daß auch die Dichte homogen für die ganze Probe ist und zwar sowohl für den glasig erstarrten als auch für den zähelastischen amorphen Zustand, dann folgt unmittelbar, daß optische Eigenschaften, wie der Brechungsindex und die Doppelbrechung homogen für die Proben sind, wobei bei amorphen Polymeren der Betrag der Doppelbrechung einheitlich Null ist. Folglich sind Polymere in den beiden genannten Zuständen transparent; unter gekreuzten Polarisatoren erscheinen die beiden genannten Zustände schwarz. Die weite Verbreitung amorpher Polymere in technischen Produkten wie Folien, Lichtleitern, Spezialbrillen oder technischen Verglasungsmaterialien beruht auf diesen besonderen optischen Eigenschaften.

In den letzten Jahren ist nun eine Reihe von technischen Nutzungen amorpher Polymere im zähelastischen und glasig erstarrten Zustand im Bereich optischer Speicher bekannt geworden. So ist u.a. in den vergangenen Jahren eine Reihe von Photopolymeren zur Aufzeichnung von Phasenhologrammen vorgeschlagen worden. (Vgl. P. Hariharan, Optical Holography, Cambridge, University Press 1984; Sh. Reich, Angew. Chemie 89, 467 (1977); H.M. Smith Holographic Recording Materials, Springer Verlag Berlin (1977); W. Driemeier, M. Kopietz, M.D. Lechner, Colloid Polym. Sci. 264, 1024 (1986)). Es handelt sich hierbei um Mischungen von Monomeren bzw. Oligomeren mit lichtsensibilisierten Katalysatoren. Der Wirk-Mechanismus als Informationsspeicher beruht darauf, daß sich der Brechungsindex mit dem Molekulargewicht

ändert. Eine örtlich inhomogene Lichtverteilung führt über eine dadurch induzierte inhomogene Polymerisation zu einer inhomogenen Verteilung des Brechungsindex. In analoger Weise kann der Brechungsindex durch eine photochemische Vernetzung räumlich variiert werden. (Vgl. Sh. Reich loc.cit). Ein wesentlicher Nachteil dieser Methode ist, daß es sich um eine irreversible Informationsspeicherung handelt und daß infolge des Vorliegens von Molekülen mit unterschiedlichen Kettenlängen Diffusionsvorgänge auftreten, was zu einer Beeinträchtigung der optisch gespeicherten Informationen führt.
Weiterhin wird in der Literatur die Möglichkeit beschrieben, optisch zugängliche Informationen (über das Prägen von amorphen Polymeren) in die Oberfläche amorpher Polymere einzuschreiben. Dieses Verfahren kommt bei Compact Disc ROM's bzw. Audio-Compact Discs zur Anwendung. Es hat den Nachteil, daß keine Datenlöschung und auch keine Wiedereinschreibbarkeit möglich ist. (Vgl. J. Hennig, Kunststoffe 75, 7 (1985), Philips Technical Review 40, 6 (1982)).

Es wird ebenfalls in der Literatur von Verfahren berichtet, die von Farbstoff-dotierten amorphen Polymerfilmen ausgehen, die - auf geeignete Systeme aufgebracht - optisches Einschreiben von Informationen in Form von Löchern bzw. Blasen erlauben. Auch dieses Verfahren läßt keine Löschung und Wiedereinschreibung der Daten zu. (Vgl. M. Law, D. Johnsen, J. Appl. Phys. 54, 9 (1983)).

Die Methode des photochemischen Lochbrennens macht sich die selektive Ausbleichbarkeit der Absorptionslinien von Farbstoffmolekülen in amorphen Polymermatrizen zunutze. Ausgangspunkt ist die inhomogene Linienverbreiterung durch "Side-Resonanzen", in die bei tiefen Temperaturen Frequenzlöcher mit hoher Informationsdichte reversibel eingeschrieben werden können. Dieses Verfahren hat u.a. den Nachteil des Erfordernisses tiefer Temperaturen beim Einschreiben, bei der Speicherung sowie beim Auslesen (Vgl. A. Gutierrez, J. Friedrich, D. Haarer, H. Wolfrom, IBM Journal of Research and Development 26, 2 (1982)).

Andere Speicherverfahren auf der Basis thermoplastischer Polymere beruhen auf der Deformierbarkeit von Polymeroberflächen unter dem Einfluß elektrostatischer Kräfte. Das entstandene Oberflächenrelief dient dann als Phasenmodulator für eine transmittierte bzw. reflektierte Beleuchtungswelle. Das erforderliche Oberflächenladungsbild wird dabei mittels eines aus Thermoplast, Photoleiter und Leiter aufgebauten Sandwiches erzeugt, auf das die zweidimensionale optische Information aufbelichtet wird. Die optische Information kann in diesem Fall gelöscht werden und es kann neu eingeschrieben werden. Der Nachteil dieses Verfahrens ist der recht komplexe Aufbau des Sandwichs sowie die Tatsache, daß der gesamte Schreib-Löschvorgang mehrere komplizierte Prozeßschritte erfordert (Vgl. H.M. Smith, Holographic Reading Materials). In der US-A 4 551 819 wird ein optisches Aufzeichnungsmedium unter Verwendung eines doppelbrechenden Polymermaterials beschrieben wobei unter der Einwirkung elektromagnetischer Strahlung an den dafür vorgesehenen Stellen die Doppel brechung modifiziert und damit die Information eingelesen wird. In dem Patent wird -soweit nachvollzichbar-Stets ein durch Verstreckung anisotropes Medium verwendet.

## Aufgabe und Lösung

Nach wie vor besteht ein großes Interesse an optischen Speichermedien, die neben hohen Aufzeichnungsdichten auch die Möglichkeit einer reversiblen Speicherung von Informationen auf optischem Wege aufweisen. Die vorstehend erläuterten Lösungen des Problems der optischen Datenspeicherung in amorphen Polymeren stellen relativ eng begrenzte technische Lösungen dar. So sind in vielen Fällen die Informationen nicht reversibel gespeichert, in anderen Fällen ist der Aufbau des Speichermediums komplex, die für die Speicherung erforderlichen Prozesse aufwendig bzw. es liegen technisch wenig sinnvolle Temperatureinschränkungen für das Speichermedium vor.

Es wurde nun gefunden, daß eine besonders günstige Form der optischen Datenspeicherung durch Anwendung der erfindungsgemäßen Vorrichtung erreicht werden kann. Die Erfindung betrifft somit eine Vorrichtung zur optischen Informationsspeicherung unter Verwendung von Polymeren als Speichermedium, wobei die Vorrichtung einen Film aus einem Polymeren AM-P als Speichermedium enthält und eingerichtet ist, um mittels einer lokalen Variation der Molekülordnung die Information einzuspeichern, dadurch gekennzeichnet, daß das Polymer amorph und makroskopisch isotrop ist und in den Seitengruppe und/oder innerhalb des Kettenrückgrats photochrome Gruppen enthält, die unter Anwendung polarisierten Lichts die lokale Variation der Molekülanordnung bedingen, die durch Temperaturerhöhung, insbesondere durch Licht, wieder rückgängig gemacht werden Kann.

Vorzugsweise geschieht die Variation der Molekülordnung durch Lichteinstrahlung mittels Laserstrahlen. Im allgemeinen verläuft der Prozeß so, daß mittels Laserstrahl durch eine lokale Reorientierung oder Desorientierung von Molekülsegmenten die optische Information eingespeichert wird.

Die Funktion des Speicherprozesses beruht auf einer photoinduzierten Veränderung von geeigneten, als Seitengruppen oder als Rückgratgruppen innerhalb der Hauptketten der Polymeren AM-P eingebauten, Molekülgruppen M-GR. (Vgl. C.D. Eisenbach, Polymer 21, 1175 (1980); G.H. Brown, Photochromism in "Techniques of Chemistry" Vol. 3, J. Wiley, New York (1971)), G. Smets in Advances in Polymer Science Bd. 50, Springer Verlag 1983).
Unter der Eigenschaft der Photochromie sei im Zusammenhang der vorliegenden Erfindung verstanden: Die Fähigkeit einer Substanz durch Wechselwirkung mit elektromagnetischer Strahlung eine Isomerisierung zu erfahren. Die photochrome Substanz kann niedermolekular oder vorzugsweise polymergebunden sein.
Photochrome Polymere, die zur (geometrischen) Isomerisierung befähigt sind, und denen entsprechende Monomere - im Rahmen der vorliegenden Erfindung R-PH genannt - zugrundegelegt werden können, sind vielfach beschrieben worden: z.B. Vertreter der Gruppen der Acryl-Azoverbindungen lassen sich z.B. der NL-A 66 13 881, der JP-A 71-14,905 (Chem. Abstr. 75, 64617n); JP-A 73-06198 (Chem Abstr. 79, 13 7671v), JP-A 60-192712 (Chem. Abstr. 104, 197694z), JP-A 58-40103 (Chem. Abstr. 99, 123534d), H.S. Blair et al., Polymer 25 (9) 1347-52 (1984); C.D. Eisenbach, Makromol. Chemie 18, (2) 565-571 (1979), JP-C 83-40503 (Chem. Abstr. 99, 123534d) entnehmen.
Vertreter der Gruppe der Acrylazine: z.B. gemäß JP-A 74-111995 (Chem. Abstr. 82, 98807j). DDR-A 119 343. Vertreter der Gruppe der Stilbene: F. Mikes et al. Die Makromol. Chemie 175, 2375 (1974). Vertreter der Gruppe der Spirobenzopyrane: JP-OS 70-28893 (Chem. Abstr. 75, 6827v); M. Kikuchi et al, Nippon Kagaku Kaishi 1972, 1323-30 (Chem. Abstr. 77, 140645d); Verborgt et al. J. Polym. Sci, Polym Chem. Ed. 1974, 2511-23 (Chem. Abstr. 82, 98628b); G. Smets et al. Pure Appl. Chem. 1978 (5) 845-856; E.I. Merkulov et al. Izv. Akad Nauk SSSR, Ser. Khim 1976 (3) 706-8 (Chem. Abstr. 85, 21992v). US-A 4 405 733,
Vertreter der Gruppe, die Quecksilber-Thiocarbazonateinheiten enthalten wie z.B. bei H. Kamogawa J. Polym. Sci 9 (Al) 335 (1971).
Vertreter der Gruppe der Fulgide sind z.B. bei H.G. Heller, Spec. Publ.-Royal Society of Chemistry 60, 121-135 (1986) beschrieben.
Dabei stehen erfindungsgemäß die mit dem photophysikalischen Prozeß einhergehende Variation der Molekülgeometrie und die damit verbundenen induzierten lokalen Nichtgleichgewichtszustände des amorphen Polymerfilms im Vordergrund. Diese verursachen lokal Variationen der optischen Eigenschaften, wie des Brechungsindex, der Doppelbrechung bzw. des Absorptionsverhaltens über induzierte Dichte- bzw. Orientierungsvariationen. Durch eine thermisch induzierte Rückrelaxation kann die eingeschriebene optische Information gelöscht werden.
Die Temperatur des Speichermediums, bei der die Information eingespeichert wird, kann im Bereich des festen, glasig erstarrten Zustandes sein, also bei Temperaturen unterhalb der Glastemperatur. Alternativ kann die Temperatur des Speichermediums, bei der die Information eingespeichert wird, auch so gewählt werden, daß der zähelastische Zustand vorliegt. Der entstandene makroskopisch anisotrope Bereich wird dann unterhalb der Glastemperatur eingefroren. Die erzeugten Streuzentren bzw. reorientierten Bereiche können als optische Information ausgelesen werden. (Zur Bestimmung der Glastemperatur Tg vgl. E.A.TURI Thermal Characterization of Polymeric Materials pg 169 ff Academic Press, New York 1981).

Die amorphen Polymeren AM-P

Die erfindungsgemäß verwendbaren Polymeren gehorchen im allgemeinen dem Prinzip, daß die Ketten

a) vollständig oder partiell aus geeigneten photosensitiven Molekülbausteinen aufgebaut sind und

b) amorph sind. Unter dem amorphen Zustand im Sinne der vorliegenden Erfindung sei die Abwesenheit kristalliner Ordnung im maßgeblichen Anteilen insbesondere Abwesenheit des flüssigkristallinen Zustands verstanden.

Es kann sich um reine Hauptkettenpolymere handeln, Polymere mit Seitengruppen oder Verzweigungen, um Blockcopolymere oder um vernetzte Polymere. Die Anforderungen an die chemische Struktur der amorphen Polymere für die genannten Orientierungsverfahren sind in der Literatur beschrieben (Vgl. H.G. Elias loc.cit; D.W. van Krevelen loc cit; B. Wunderlich loc.cit; F. Buechi loc.cit). Die im Sinne der vorliegenden Erfindung störende Tendenz zur Ausbildung einer kristallinen Strukur kann hiernach gezielt und erfolgreich herabgesetzt werden durch:

- Verwendung von Kettenmolekülen hohen Molekulargewichts
- Verwendung von statistischen Copolymeren
- die Herstellung ataktischer Polymere
- die Einführung von kurzkettigen Verzweigungen bzw.
- eine Vernetzung.

Die erfindungsgemäß zu verwendenden, amorphen Polymeren AM-P enthalten somit entweder in der Seitengruppe oder innerhalb des Kettenrückgrats oder gegebenenfalls in beiden photosensitive Molekülbausteine bzw. Molekülgruppen. Diesen photosensitiven Molekülbausteinen bzw. -gruppen liegen in der Regel zugrunde ein oder mehrere Monomere der Formel

R - PH

worin PH eine photosensitive Einheit, vorzugsweise ausgewählt aus der Gruppe, bestehend aus oder enthaltend Azobenzol, Bisazobenzol, Trisazobenzol und Azoxybenzol substituierten Derivaten derselben, oder Stilben oder Spiropyran darstellt, und worin R für die chemische Anbindung der photochemischen Einheit im Makromolekül verantwortliche Gruppe, in der Regel eine polymerisations- oder polykondensationsfähige, insbesondere radikalisch polymerisationsfähige Gruppe steht. Unter substituierten Derivaten seien solche mit -I-Effekt (vgl. E.S. Gould, Mechanism and Structure in Organic Chemistry, pg. 207, Holt Rinehard & Winston, New York, 1960 gennant, insbesondere -CN, $-NO_2$, $-COOR_2$.

R kann beispielsweise von der Acryl- oder Methacrylsäure abgeleitete Gruppe

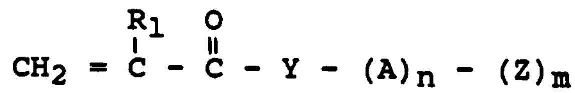

worin

$R_1$ für Wasserstoff oder Methyl, Y für Sauerstoff oder einen Rest

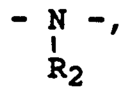

wobei $R_2$ Wasserstoff oder einen Alkylrest mit 1 bis 6 Kohlenstoffatomen bedeutet und

A für eine abstandhaltende Einheit (Spacer) vorzugsweise eine $-(CH_2)_r-$ Gruppe und n und m für null oder eins und r für eine Zahl von 1 bis 12 steht.

Z für eine Anbindungsgruppe vorzugsweise ausgewählt aus den Funktionen - 0 -;

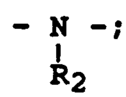

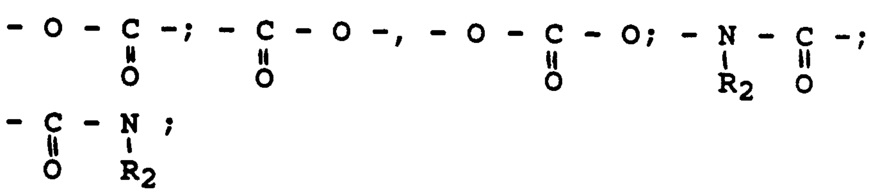

Als Auswahlkriterium für die Eignung der photosensitiven Molekülbausteine kann die Eigenschaft gelten, unter dem Einfluß von Licht geeigneter Wellenlänge eine Änderung der Geometrie Zu erfahren, beispielsweise eine cis-trans-Umwandlung oder Ringöffnung .

Als Vertreter der Monomeren mit photosensitiven Molekülbausteinen seien genannt: z.B. solche mit Bausteinen mit Stilben-Konfiguration, mit Azobenzol-Konfiguration, mit Spirobenzopyran-Konfiguration, mit Fulgid-Konfiguration.

Die Herstellung der photosensitiven Polymeren kann wie folgt vorgenommen werden:

Als Comonomere können an sich bekannte Monomere, vorzugsweise radikalisch polymerisierbare Monomere, dienen, wobei auf den amorphen Charakter des gebildeten Copolymerisats zu achten ist. Insbesondere kommen dafür Monomere M der Formel

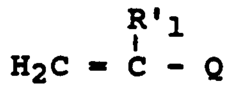

worin $R'_1$ die gleiche Bedeutung besitzt wie $R_1$ und worin Q für einen Rest

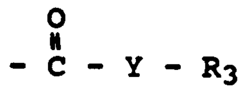

steht, wobei $R_3$ Wasserstoff, einen gegebenenfalls cyclischen Alkylrest mit 1 bis 18 Kohlenstoffatomen oder einen gegebenenfalls substituierten Arylrest, insbesondere einen Phenylrest mit bis zu 18 Kohlenstoffatomen bedeutet oder

- Q für einen Rest $(R)_n$ steht, worin R für ein Methyl- oder Ethylrest und n für null, eins oder zwei steht oder
- Q für Wasserstoff, Methyl, Fluor, Chlor oder einen konjugierten gegebenenfalls chlorsubstituierten ungesättigten Rest mit 2 bis 4 Kohlenstoffatomen oder für eine Nitrilgruppe steht, oder
- Q für einen heterocyclischen, vorzugsweise einen fünf- oder sechsgliedrigen Rest mit mindestens einem und bis zu drei Stickstoffatomen im Rest und gegebenenfalls einem oder zwei Sauerstoffatomen, die als Carbonylsauerstoff vorliegen können im Rest oder
- Q für einen Rest $-OR_4$ worin $R_4$ für einen Alkylrest mit 1 bis 20 vorzugsweise 1 bis 6 Kohlenstoffatomen oder einen Rest $-OCOR_4$ steht, in Frage. (Vgl. auch Ullmann's Encyclopädie der technischen Chemie 3. Auflage Bd. 14, S. 108 - 109, Urban & Schwarzenberg, München 1963)

Im allgemeinen liegt der Anteil an Comonomeren M in den amorphen Polymeren AM-P bei mindestens 20 und bis 99,9 Mol.-%, vorzugsweise 50 bis 90 Mol.-%, insbesondere 75 ± 10 Mol.-% bezogen auf das Gesamtpolymerisat.

Die Konzentration an photosensitiven Molekülgruppen in der Seitenkette oder innerhalb des Kettenrückgrats kann durch geeignete Führung der Copolymerisationsbedingungen kontrolliert werden. Von besonderem Interesse sind ataktische Polymerisate der Monomeren M, worin Q für einen Rest $-COYR_3$ steht, insbesondere für Ester der (Meth)acrylsäure.

Gennant seien als Monomere M insbesondere das Methyl-, Ethyl, Propyl-, Butyl-, Pentyl-, Hexyl-, n-Heptyl-, Ethylhexyl-, n-Dodecyl-, n-Hexadecyl-, Stearyl-, Cyclohexyl-, Phenyl-, Benzyl-, β-Phenylethyl-methacrylat und das entsprechende Acrylat, speziell das Methylmethacrylat.

Im allgemeinen führt die radikalische Polymerisation bei Temperaturen oberhalb Raumtemperatur mittels der bekannten Initiatoren wie den Perverbindungen oder den Azoverbindungen in der Regel in Mengen von 0,001 bis 0,5 Gew.-% bezogen auf die Monomeren zu den erwünschten ataktischen Polymeren.

Genannt seien z.B. Dibenzoylperoxid, Dilauroylperoxid, Di-tert.-butylperoxid, Azoisobuttersäuredinitril. (Vgl. H. Rauch-Puntigam, Th. Völker, Acryl- und Methacrylverbindungen, Springer-Verlag Berlin 1967).

Im allgemeinen liegt die Glastemperatur Tg der amorphen Polymerisate AM-P oberhalb -20 Grad C, beziehungsweise oberhalb 18 Grad C (zur Bestimmung der Tg vgl. E.A. Turi loc.cit). Im letzteren Fall resultiert bei Raumtemperatur ein fester Film, bei Tg unterhalb Raumtemperatur ein zähelastischer. Bei aus Emulsionspolymerisaten gebildeten Filmen liegt die Glastemperatur Tg im allgemeinen nicht über 60 Grad C.

Die Herstellung der amorphen Polymeren AM-P kann nach an sich bekannten Verfahren, beispielsweise durch Emulsionspolymerisation, Lösungspolymerisation oder Polymerisation in Masse erfolgen. (Vgl. H. Rauch-Puntigam, Th.Völker loc.cit).

Eine bevorzugte Form der Anwendung der Polymeren AM-P ist die eines Films, weshalb die Darstellung in Form einer filmbildenden, vorzugsweise wäßrigen, Dispersion von besonderem Interesse ist.

Als Comonomere für die Herstellung filmbildender Polymere AM-P auf Acrylatbasis in Emulsionspolymerisation kommen insbesondere der Methyl-, Ethyl-, n-Butyl-, 2-Ethylhexylacrylsäureester sowie der Methyl- und der n-Butylmethacrylsäureester infrage.

Die Filmbildung erfolgt in der Regel durch Verdunsten des Lösungsmittels, vorzugsweise des Wassers, wobei auch eine Trocknung durch Wärmezufuhr, beispielsweise durch Infrarot oder im Wärmeofen, durchgeführt werden kann. Als Fließmittel können bei der Filmbildung flüchtige Lösungsmittel wie Xylol, Ethylacetat oder Ethylglykol in weniger als 10 Gew.-% bezogen auf den Gesamtansatz angewendet werden.

Die Vorrichtung

Die Vorrichtung enthält definitionsgemäß einen Film aus dem amorphen Polymeren AM-P als Speichermedium. Sie ist eingerichtet um mittels einer lokalen Variation der Geometrie der chromophoren Gruppen des Speichermediums Information einzuspeichern im Einklang mit den im Hauptanspruch und den Unteransprüchen niedergelegten Merkmalen. So enthält die Vorrichtung zweckmäßig zusammen mit der Lichtquelle eine Wärmequelle, durch die gegebenenfalls zusammen mit der Lichtquelle eine Erwärmung des Polymerfilms bewirkt wird. Der Vorrichtung kann z.B. vorteilhaft ein Laser als Wärmequelle zugeordnet sein. In der Regel ist das Absorptionsverhalten des Speichermediums so gewählt, daß die Information mit einem Laserstrahl geeigneter Wellenlänge und -Intensität eingespeichert und mit einem anderen Laserstrahl anderer Wellenlänge ohne Störung der gespeicherten Information ausgelesen werden kann.
Das Speichermedium enthält eine in ihrem Absorptionsverhalten der Emissionswellenlänge des Schreiblasers angepaßte photochrome Substanz, womit die lokale Variation der Molekülordnung induziert werden kann. Die für den Informationsspeicherprozeß vorgeschlagenen amorphen Polymeren AM-P enthalten, wie ausführlich dargestellt, photochrome Gruppen in der Hauptkette oder als Seitengruppe, deren charakteristisches Merkmal eine Geometrieänderung unter dem Einfluß von Licht einer geeigneten Wellenlänge ist.

Das Polymere kann in Form eines dünnen Films, eines Laminats, als Beschichtung einer festen oder biegsamen Matrix angewendet werden. Die Dicke des Films liegt vorteilhafterweise im Bereich zwischen $10^{-3}$ und $10^{-6}$ m. Die Glastemperatur des Polymeren kann oberhalb Zimmertemperatur liegen, so daß ein fester Film resultiert, oder unterhalb Zimmertemperatur, so daß ein zähelastischer Film resultiert. Analoges gilt für den Fall einer Beschichtung oder eines Laminates.

Durch Gießen aus Lösung, durch Spincoaten, durch Extrusion unter geeigneten Bedingungen oder durch Pressen aufgeschmolzenen Granulates kann ein makroskopisch isotroper Zustand des Films, der Beschichtung, des Laminats erreicht werden. Durch Deformation bei der Herstellung des Filmes, der Beschichtung, des Laminates kann ein makroskopisch anisotroper Zustand hergestellt werden. Gleiches gilt für die Abkühlung des Polymeren unter der Einwirkung eines elektrischen oder magnetischen Feldes. Die Orientierung ist im glasig erstarrten Zustand eingefroren bzw. im zähelastischen Zustand langfristig fixiert.

Prozeß der Informationsspeicherung

Das Einschreiben der Information geschieht im Prinzip durch die Erzeugung einer lokalen geometrischen Störung am Ort der photochromen Gruppen mittels Lichtstrahl, was zu einer Reorientierung der Umgebung dieser Gruppen führt. Dies trifft sowohl im zähelastischen Zustand als auch im Glaszustand zu. Im Fall eines makroskopisch isotropen Ausgangszustands führt dies zu anisotropen Bereichen, die eine starke Doppelbrechung zeigen. Es resultiert ein Phasenobjekt. Nach Abschalten des Lichtes friert der veränderte Orientierungszustand ein. Der experimentelle Aufbau kann in Anlehnung an M.Eich, J.H. Wendorff, Makromol. Chem.Vol. 186, No. 12, 1985 erfolgen.

Löschen der eingespeicherten Information

Grundsätzlich kann das Löschen der eingespeicherte Information durch Temperaturerhöhung über Tg bis über den Temperaturbereich des zähelastischen Zustandes hinaus erfolgen. Dies kann lokal erfolgen durch geeignete Führung eines Lichtstrahls oder makroskopisch durch geeignete Temperaturführung des gesamten Films, der Beschichtung, bzw. des Laminats. Unterstützend kann hierbei ein elektrisches oder magnetisches Feld geeigneter Stärke und Richtung angelegt werden bzw. ein mechanischer Orientierungsprozeß kann durchgeführt werden.

Die erfindungsgemäße Vorrichtung sei am folgenden Beispiel erläutert.

BEISPIEL

Die Untersuchungen mit polarisiertem Licht können in Anlehnung an J. Michl, E.W. Thulsterup; Spectroscopy with Polarized Light VCH-Verlag 1986 vorgenommen werden.

A. Vorrichtung und Anwendung

Bei einer bevorzugten Ausführungsform (vgl. Fig. 1) umfasst die erfindungsgemäße Vorrichtung eine Registrierzelle (1), bestehend aus zwei planparallel angeordneten transparenten Platten (2), vorzugsweise Glasplatten im geeigneten Abstand, im allgemeinen unterhalb 1 mm, vorzugsweise bei ca. 10 um. Die

Grundfläche beträgt einige $cm^2$ bis $dm^2$. Die beiden Innenflächen der Glasplatte (2) waren mit $InO_2/SnO_2$ leitfähig bedampft und leitender Kontakt nach außen war hergestellt worden. Die derart präparierten Glasplatten (2) wurden mit Hilfe eines temperaturstabilen Klebers, beispielsweise eines Silikonklebers, so aneinanderfixiert, daß ein zellenartiger leerer Innenraum mit jeweils nur einem Einlaß und Auslaß von einigen mm Breite gebildet wird.

Der gewünschte Abstand der beiden Glasplatten (2) wird dabei durch zwei geeignete Abstandshalter (3) der passenden Abmessung, vorzugsweise aus Polyimid-Kunststoff, fest eingestellt. Die Registrierzelle weist weiterhin Elektroden (4) auf. Nach Antrocknen des Klebers wird die Zelle auf einer heizbaren Einrichtung mit dem amorphen Polymeren, AM-P gefüllt. Durch Kapillarwirkung bedingt füllt sich so der noch freie Zellenraum vollständig mit der Polymerschmelze.

Bei dem amorphen Polymer AM-P handelt es sich um ein Copolymer aus 75 Gew.-% Methylacrylat und 25 Gew.-% mesogenem Cyanoazobenzol-Comonomer (siehe Herstellungsbeispiel). Infolge des gewählten Verhältnisses tritt hier keine flüssigkristalline (L.C.)-Phase auf, so daß das Polymere einen amorphen Glasbereich aufweist.

Dieses System wurde ausgewählt, um an einem isotropen Polymeren die anisotrope Variation der optischen Eigenschaften bei Bestrahlung mit polarisiertem Licht zu demonstrieren. Im folgenden sollen an diesem System die bereits erwähnten, aus der Isomerisierungsreaktion resultierenden Orientierungs- und Umlagerungseffekte dokumentiert werden.

Fig. 2 zeigt rechts das UV-VIS-Spektrum das unbestrahlten amorphen Polymeren. Eine geeignete Meßanordnung ist z.B. in DE-A 33 42 040 beschrieben. Die mit orthogonalen Polarisationen aufgenommenen Kurven sind deckungsgleich. Nach Bestrahlung mit Licht der Wellenlänge $\lambda$ = 514,5 nm resultieren deutliche Absorptionsunterschiede, je nach dem, ob die Polarisation des Probenstrahls parallel oder senkrecht zu der für die Bestrahlung verwendeten Welle gewählt wurde.

Man erkennt, daß die Absorption senkrecht zur Einschreibepolarisation größer als parallel dazu ist. Somit wird manifest, daß durch das Einschreiben ein Dichroismus erzeugt wurde.

Trägt man die Differenz der Extinktion als Funktion des Polarisationswinkels auf, so ergibt sich eine charakteristische Abhängigkeit mit maximaler Absorption senkrecht zur Polarisation der Bestrahlungswelle (Fig. 3)

Der Kurvenverlauf läßt sich aus dem Abbau von trans-Molekülen bevorzugt in Richtung der Bestrahlungspolarisation, sowie durch die in den cis-Molekülen bei der Isomerisierung ablaufenden Segmentumlagerungen erklären. Hierbei werden die bei $\lambda$ = 460 nm stärker absorbierenden cis-Moleküle aus der Richtung der Bestrahlunspolarisation weggedreht. Dabei steht die Reorientierung der Dipolübergangsmomente eindeutig im Vordergrund. Neben der anisotropen Charakteristik findet man für die 90 Grad relativ zur Bestrahlungspolarisation gemessenen Extinktionen höhere Werte, als dies im isotropen amorphen Zustand der Fall war. Dieses Phänomen ist nur durch Umorientierung, nicht aber durch einfache Photoselektion erklärbar.

Erwartungsgemäß wird der optisch induzierte Dichroismus von einer induzierten Doppelbrechung begleitet. Dabei fallen die Richtungen des maximalen und minimalen Brechungsindex mit denen der Extinktionsextrema zusammen. Beide Brechungsindizes können im Abbé-Refraktometer unter polarisiertem Licht direkt bestimmt werden.

Vor der Bestrahlung betrug der isotrope Brechungsindex $n_{is}$ = 1,550. Nach der Bestrahlung mit 5 $mW/cm^2$ ($\lambda$ = 514,5 nm) betrug $n_{\parallel}$ = 1,546 und $n_{\perp}$ = 1,556; die induzierte Doppelbrechung demnach $\delta\, n_{ind} = 10^{-2}$.

An diesem Experiment wird deutlich, daß sich bei genügend hohen Konzentrationen isomerisierungsfähiger Azobenzoleinheiten bereits am amorphen System AM-P1 starke Veränderungen des (isotropen) Orientierungszustandes und daraus folgend, Modulationen des komplexen Brechungsindexes erzielen lassen. Demzufolge kann man sehr viel stärkere Effekte bei Systemen erwarten, die es zulassen, die Dipolübergangsmomente einheitlich zu orientieren und damit optimale Absorptionsbedingungen schaffen.

Vorteilhafte Wirkungen

Die erfindungsgemäße Vorrichtung eignet sich u.a. zur reversiblen Optischen Informationsspeicherung. Dabei wird, ausgehend von abbildungsfähigen materiellen Strukturen, die zu speichernde Struktur mittels einer kohärenten, insbesondere monochromatischen Lichtquelle beleuchtet und das Interferenzmuster, das durch Richtung, Amplitude und Phasenlagen des von der zu speichernden Struktur gestreuten Lichts relativ zu einer von derselben Lichtquelle stammenden Referenzlichtquelle bestimmt wird, in der erfindungsgemäßen Vorrichtung aus einem amorphen Polymeren mit photochromen Eigenschaften als Speichermedium holographisch registriert und gespeichert. Das Auslesen der analog gespeicherten Information geschieht vorteilhaft durch Beleuchten des Films mit kohärentem (monochromatischem) Licht.

Der Vorgang der reversiblen optischen Informationsspeicherung wird mittels eines Laserstrahls beliebigen

Querschnitts bewirkt, der im orientierten Film als Speichermedium eine digitale Phasen- oder Amplitudenstruktur erzeugt. Für bestimmte Anwendungen (CD, Synthetische Hologramme) werden vorteilhaft Laserstrahl und Speichermedium sowohl beim Einspeichern als auch beim Auslesen der Information in definierter Weise relativ zueinander bewegt, wobei man zweckmäßig beim Einspeichern während des Bewegens die Intensität des Laserstrahls geeignet moduliert.

Vorteilhaft wird beim Einspeicherungsvorgang auf digitalem Weg über eine vorgegebene Intensitätsmodulation eine Phasen- oder Amplituden-Struktur im Speichermedium erzeugt. Die für die Erzeugung der Phasenstruktur erforderliche Intensitätsmoldulation kann rechnerisch ermittelt werden.Die Reproduktion wird durch Ausleuchten des gewonnenen synthetischen Hologramms mit einer Referenzwelle vorgenommen. Die mit Hilfe der erfindungsgemäßen Vorrichtung erreichbare Informationsdichte (ausgedrückt in Linien pro Längeneinheit) bezüglich aller drei Koordinatenachsen wird einerseits begrenzt durch die linearen Abmessungen des Speichermediums und andererseits durch 4 000 Linien pro mm. Im Sinne der vorstehend geschilderten Anwendungsmöglichkeiten kann die erfindungsgmäße Vorrichtung beispielsweise

- zur reversiblen, optischen Speicherung von Information
- zur optischen Signalverarbeitung
- zur Fourier-Transformation und -Faltung
- zur Herstellung von Abbildungssystemen
- zur Erzeugung und Speicherung von Hologrammen, die vergleichbare Abbildungseigenschaften haben wie Linsen
- in der kohärenten, optischen Korrelationstechnik

eingesetzt werden. Zur Anwendung der Holographie vgl. H.J. Canlfield, Handbook of Optical Holography, Academic Press 1979; H.M. Smith Topics in Applied Physics Vol. 20, Holographic Recording Materials, Springer Verlag, Heidelberg, New York.

B. Herstellung der amorphen Polymeren AM-P.

In einem Schlenkgefäß werden etwa 5 - 6,5 g Monomer in 5 ml 1,4-Dioxan gelöst und mit 1 Mol.-% 2,2'-Azobis-(2,4-dimethyl)valeronitril (bezogen auf das Monomere) versetzt. Die Monomerlösung wird durch mehrmaliges Evakuieren und Spülen mit Helium entgast und in Thermostaten bei 70 Grad C polymerisiert. Die entstandenden Polymeren werden mit kaltem Ether ausgefällt, in Methylenchlorid gelöst und in Methanol ausgefällt. Dieser Vorgang wird solange wiederholt, bis im Dünnschichtchromatogramm kein Monomer mehr zu erkennen ist. Das gereinigte Polymer wird im Ölpumenvakuum bei 30 - 40 Grad C getrocknet. Resultat s. TABELLE.

Aufbau der Polymeren:

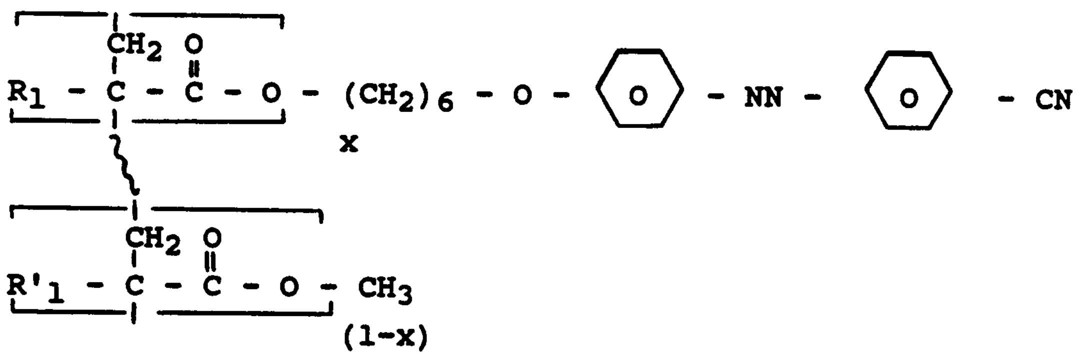

TABELLE

| | $R_1$ | $R'_1$ | X | Ausbeute | Mw[1] g/mol | Tg / Grad C |
|---|---|---|---|---|---|---|
| AM-PM | H | H | 0,25 | 30,4 % d.Th | 10 100 | 30 |
| AM-P2 | $CH_3$ | H | 0,25 | 65,34% d.Th | 27 700 | 35 |
| AM-P3 | $CH_3$ | H | 0,01 | 44,0 % d.Th | 47 800 | 27 |

1) aus SEC; Polystyrol-Eichkurve

## Patentansprüche

1. Vorrichtung zur optischen Informationsspeicherung unter Verwendung von Polymeren als Speichermedium, wobei die Vorrichtung einen Film aus einem Polymeren als Speichermedium enthält und eingerichtet ist, um mittels einer lokalen Variation der Molekülanordnung unter Anwendung von Licht die Information einzuspeichern,
dadurch gekennzeichnet,
daß das Polymer amorph und makroskopisch isotrop ist und in der Seitengruppe und/oder innerhalb des Kettenrückgrats photochrome Gruppen enthält, die unter Anwendung polarisierten Lichtes die lokale Variation der Molekülanordnung bedingen, die durch Temperaturerhöhung, insbesondere durch Licht, wieder rückgängig gemacht werden kann.

2. Vorrichtung gemäß dem Anspruch 1, dadurch gekennzeichnet, daß sie eine Wärmequelle enthält, durch die gegebenenfalls zusammen mit der Lichtquelle eine Erwärmung des Polymerfilms bewirkt wird.

3. Vorrichtung gemäß Anspruch 1, dadurch gekennzeichnet, daß die Temperatur des Speichermediums, bei welcher die Information eingespeichert wird, im Bereich des formstabilen Zustands unterhalb der Glastemperatur Tg des Polymeren liegt und nach Abschalten der Licht- bzw. Wärmequelle die örtliche Information im Glaszustand des Polymeren fixiert wird.

4. Vorrichtung gemäß Anspruch 1, dadurch gekennzeichnet, daß die Temperatur des Speichermediums, bei welcher die Information eingespeichert wird, im viskoelastischen Zustand oberhalb der Glastemperatur Tg des Polymeren liegt.

5. Vorrichtung gemäß den Ansprüchen 1 bis 4, dadurch gekennzeichnet, daß sie eingerichtet ist zum Löschen der eingespeicherten Information, indem lokal per Temperaturerhöhung und gegebenenfalls nachfolgende Abkühlung im elektrischen oder magnetischen Feld oder einen mechanischen Orientierungsprozeß der ursprüngliche Orientierungszustand im lokalen Bereich wieder hergestellt wird.

6. Vorrichtung gemäß den Ansprüchen 1 bis 5, dadurch gekennzeichnet, daß sie eingerichtet ist zum Löschen der eingegebenen Gesamtinformation und Wiederherstellung des Ausgangszustands, in dem die Temperatur des Speichermediums erhöht und gegebenenfalls im elektrischen oder magnetischen Feld oder mittels eines mechanischen Orientierungsprozesses die Information gelöscht und der Ausgangszustand wiederhergestellt wird.

7. Vorrichtung gemäß den Ansprüchen 1 bis 6, dadurch gekennzeichnet, daß der Vorrichtung ein Laser als Wärmequelle zugeordnet ist.

8. Vorrichtung gemäß den Ansprüchen 1 bis 7 , dadurch gekennzeichnet, daß das Absorptionsverhalten des Speichermediums so gewählt ist, daß die Information mit einem Laserstrahl geeigneter Wellenlänge und geeigneter Intensität eingespeichert und mit einem anderen Laserstrahl anderer Wellenlänge ohne Störung der gespeicherten Information ausgelesen werden kann.

9. Vorrichtung gemäß den Ansprüchen 1 bis 8, dadurch gekennzeichnet, daß eine Variation des Ordnungszustands durch Anlegen eines elektrischen oder magnetischen Felds erreicht wird.

10. Vorrichtung gemäß den Ansprüchen 1 bis 9, dadurch gekennzeichnet, daß sich ein makroskopisch orientierter Film zwischen zwei übereinander angeordneten Platten oder Filmen befindet.

11. Vorrichtung gemäß Anspruch 10, dadurch gekennzeichnet, daß das Speichermedium eine in ihrem Absorptionsverhalten der Emissionswellenlänge des Schreiblasers angepaßte photochrome Substanz enthält, womit die lokale Variation der Molekülordnung induziert werden kann.

12. Vorrichtung gemäß Anspruch 11, dadurch gekennzeichnet, daß das Polymer durch Einpolymerisieren einer photochromen Comonomereinheit in seinem Absorptionsverhalten der Emissionswellenlänge des Schreiblasers angepaßt ist.

13. Vorrichtung gemäß den Ansprüchen 7 bis 12, dadurch gekennzeichnet, daß die erforderliche Extinktion des Speichermediums über die Konzentration der photochromen Einheiten eingestellt wird.

14. Vorrichtung gemäß den Ansprüchen 1 bis 13, dadurch gekennzeichnet, daß die Auslesewellenlänge außerhalb des für den Schreibprozeß relevanten Absorptionsmaximums der photochromen Substanz liegt.

15. Verfahren zur reversiblen optischen Informationsspeicherung, dadurch gekennzeichnet, daß man - ausgehend von abbildungsfähigen materiellen Strukturen - die zu speichernde Struktur mittels einer kohärenten Lichtquelle beleuchtet, und das Interferenzmuster, das durch Richtung, Amplitude und Phasenlage des von der zu speichernden Struktur gestreuten Lichts relativ zu einer von der selben Lichtquelle stammenden Referenzlichtwelle bestimmt wird, in einer Vorrichtung enthaltend einen Film aus einem amorphen Polymeren als Speichermedium gemäß den Ansprüchen 1 bis 14 holographisch registriert und speichert.

16. Verfahren gemäß Anspruch 15, dadurch gekennzeichnet, daß mittels einer kohärentes monochromatisches Licht emittierenden Lichtquelle beleuchtet wird.

17. Verfahren gemäß Anspruch 16, dadurch gekennzeichnet, daß das Auslesen der analog optisch gespeicherten Information durch Beleuchtung des makroskopisch orientierten Films mit kohärentem Licht erfolgt.

18. Verfahren zur reversiblen optischen Informationsspeicherung, dadurch gekennzeichnet, daß man zur Einspeicherung mittels eines Laserstrahls beliebigen Querschnitts eine digitale Phasen- oder Amplituden-Struktur in einem makroskopisch orientierten Film als Speichermedium der Vorrichtung gemäß den Ansprüchen 1 bis 14 erzeugt.

19. Verfahren gemäß Anspruch 7, dadurch gekennzeichnet, daß man den Laserstrahl und das Speichermedium sowohl beim Einspeichern als auch beim Auslesen der Information in definierter Weise relativ zu einander bewegt.

**20.** Verfahren gemäß Anspruch 19, dadurch gekennzeichnet, daß beim Einspeichern während der Relativbewegung die Intensität des Laserstrahls in geeigneter Weise moduliert wird.

**21.** Verfahren gemäß Anspruch 20, dadurch gekennzeichnet, daß beim Einspeicherungsvorgang auf digitalem Wege über eine vorzugebende Intensitätsmodulation eine Phasen- oder Amplituden-Struktur im Speichermedium erzeugt wird und die Reproduktion durch Ausleuchten des gewonnenen synthetischen Hologramms mit einer Referenzwelle erfolgt.

**22.** Verfahren gemäß Anspruch 21, dadurch gekennzeichnet, daß die für die Erzeugung der Phasenstruktur erforderliche Intensitätsmodulation rechnerisch ermittelt wird.

**23.** Verfahren gemäß den Ansprüchen 17 bis 22, dadurch gekennzeichnet, daß die erzeugte Informationsdichte (ausgedrückt in Linien pro Längeneinheit) bezüglich aller drei Koordinatenachsen einerseits begrenzt wird durch die linearen Abmessungen des Speichermediums und andererseits durch maximal 4 000 Linien pro mm.

**24.** Verwendung der Vorrichtung gemäß den Ansprüchen 1 bis 14 zur reversiblen, optischen Speicherung von Information.

**25.** Verwendung der Vorrichtung gemäß den Ansprüchen 1 bis 14 zur optischen Signalverarbeitung.

**26.** Verwendung der Vorrichtung gemäß Anspruch 25 zur Fourier-Transformation und -Faltung.

**27.** Verwendung der Vorrichtung gemäß den Ansprüchen 1 bis 14 zur Herstellung von Abbildungssystemen.

**28.** Verwendung der Vorrichtung gemäß den Ansprüchen 1 bis 14 zur Erzeugung und Speicherung von Hologrammen, die vergleichbare Abbildungseigenschaften haben wie Linsen.

**29.** Verwendung der Vorrichtung gemäß den Ansprüchen 1 bis 14 in der kohärent optischen Korrelationstechnik.

**Claims**

**1.** A device for optical information storage using polymers as a storage medium, the device containing a polymer film as a storage medium and being equipped to store information by means of a local variation in the molecular arrangement using light, characterised in that the polymer is amorphously and macroscopically isotropic and contains, in the side group and/or within the backbone of the chain, photochromic groups which cause the local variation in the molecular arrangement using polarised light, which variation may be cancelled again by an increase in temperature, in particular by light.

**2.** A device according to claim 1, characterised in that it contains a heat source which,optionally in combination with the light source, heats the polymer film.

**3.** A device according to claim 1, characterised in that the temperature of the storage medium at which the information is stored is within the range of the dimensionally stable state below the glass transition temperature Tg of the polymer and the local information is fixed in the vitreous state of the polymer when the light or heat source is switched off.

**4.** A device according to claim 1, characterised in that the temperature of the storage medium at which the information is stored is within the visco-elastic state above the glass transition temperature Tg of the polymer.

**5.** A device according to claims 1 to 4, characterised in that it is equipped to cancel the stored information by locally re-establishing the original orientation state within the local range by an increase in temperature and optionally a subsequent cooling in the electrical or magnetic field, or by a mechanical orientation process.

6. A device according to claims 1 to 5, characterised in that it is equipped to cancel all the information supplied and re-establish the original state by increasing the temperature of the storage medium, and optionally cancelling the information in the electrical or magnetic field or by means of a mechanical orientation process, and re-establishing the original state.

7. A device according to claims 1 to 6, characterised in that a laser is associated with the device as a heat source.

8. A device according to claims 1 to 7, characterised in that the chosen absorption behaviour of the storage medium is such that the information may be stored by means of a laser beam of a suitable wavelength and suitable intensity, and the stored information may be read out, without interference, by means of another laser beam of a different wavelength.

9. A device according to claims 1 to 8, characterised in that a variation of the state of order is achieved by applying an electrical or magnetic field.

10. A device according to claims 1 to 9, characterised in that a macroscopically oriented film is positioned between two superimposed plates or films.

11. A device according to claim 10, characterised in that the storage medium contains a photochromic substance adapted, in its absorption characteristics, to the emission wavelength of the recording laser, thereby making it possible to induce the local variation in the molecular arrangement.

12. A device according to claim 11, characterised in that the polymer is adapted, in its absorption characteristics, to the emission wavelength of the recording laser by homopolymerising a photochromic comonomer unit.

13. A device according to claims 7 to 12, characterised in that the necessary extinction of the storage medium is adjusted via the concentration of the photochromic units.

14. A device according to claims 1 to 13, characterised in that the read-out wavelength is above the absorption maximum of the photochromic substance relevant for the recording process.

15. A process for reversible optical information storage, characterised in that, on the basis of reproducible material structures, the structure to be stored is illuminated by means of a coherent light source, and the interference pattern which is determined by the direction, amplitude and phase position of the light scattered by the structure to be stored, relative to a reference light source originating from the same light source, is registered and stored holographically in a device containing a film of an amorphous polymer as a storage medium according to claims 1 to 14.

16. A process according to claim 15, characterised in that the illumination is effected by means of a light source emitting coherent monochromatic light.

17. A process according to claim 16, characterised in that the reading out of the analogously optically stored information is effected by illuminating the macroscopically oriented film with coherent light.

18. A process for reversible optical information storage, characterised in that a digital phase or amplitude structure is produced in a macroscopically oriented film used as a storage medium of the device according to claims 1 to 14, in order to effect storage by means of a laser beam of any cross-section.

19. A process according to claim 7, characterised in that the laser beam and the storage medium are moved, relative to one another, in a specific manner, both during the inputting and the reading-out of the information.

20. A process according to claim 19, characterised in that the intensity of the laser beam is suitably modulated during the relative movement in the inputting operation.

21. A process according to claim 20, characterised in that during the inputting operation by digital means a phase or amplitude structure is produced in the storage medium via an intensity medium to be predetermined, and the reproduction is carried out by illuminating the resultant synthetic hologram with a reference wave.

22. A process according to claim 21, characterised in that the intensity modulation necessary for producing the phase structure is determined by computation.

23. A process according to claims 17 to 22, characterised in that the information density produced (expressed in lines per unit length) is delimited, with respect to all three co-ordinate axes, by the linear dimensions of the storage medium, on the one hand, and by a maximum of 4,000 lines per mm, on the other hand.

24. Use of the device according to claims 1 to 14, for reversible optical storage of information.

25. Use of the device according to claims 1 to 14, for optical signal processing.

26. Use of the device according to claim 25 for Fourier transformation and convolution.

27. Use of the device according to claims 1 to 14 for producing reproduction systems.

28. Use of the device according to claims 1 to 14 for producing and storing holograms which have reproduction characteristics comparable to lenses.

29. Use of the device according to claims 1 to 14 in coherent optical correlation technology.

**Revendications**

1. Dispositif de stockage optique d'informations par utilisation de polymères comme support d'enregistrement, contenant un film constitué par un polymère comme support d'enregistrement et fonctionnant de manière à stocker l'information au moyen d'une variation locale de l'arrangement moléculaire en utilisant de la lumière, caractérisé en ce que le polymère est amorphe et isotrope d'un point de vue macroscopique et contient des groupes photosensibles dans les groupes latéraux et/ou au sein de la chaîne principale, qui déterminent la variation locale de l'arrangement moléculaire lorsque l'on utilise de la lumière polarisée, cette variation pouvant être annulée par augmentation de température, en particulier avec de la lumière.

2. Dispositif selon la revendication 1, caractérisé en ce qu'il contient une source de chaleur pouvant provoquer, le cas échéant conjointement avec la source lumineuse, un réchauffement du film-polymère.

3. Dispositif selon la revendication 1, caractérisé en ce que la température du support d'enregistrement dans lequel est stockée l'information est comprise dans le domaine de l'état de stabilité de forme, en dessous de la température de transition vitreuse Tg du polymère, et en ce que lorsque l'on coupe la source lumineuse ou calorique, l'information localisée est fixée lors de l'état vitreux du polymère.

4. Dispositif selon la revendication 1, caractérisé en ce que la température du support d'enregistrement dans lequel est stockée l'information se trouve, dans le domaine de l'état visco-élastique, au-dessus de la température de transition vitreuse Tg du polymère.

5. Dispositif selon l'une quelconque des revendications 1 à 4, caractérisé en ce qu'il est apte à effacer l'information stockée en recréant localement l'état d'orientation initial par augmentation de température avec ensuite éventuellement un refroidissement, dans un champ électrique ou magnétique, ou bien par déclenchement d'un processus mécanique de réarrangement.

6. Dispositif selon l'une quelconque des revendications 1 à 5, caractérisé en ce qu'il est apte à effacer l'ensemble de l'information introduite et à recréer l'état initial en augmentant la température du support d'enregistrement et en effaçant l'information et recréant l'état initial, éventuellement dans un champ électrique ou magnétique ou bien au moyen d'un processus de réarrangement mécanique.

**7.** Dispositif selon l'une quelconque des revendications 1 à 6, caractérisé en ce que la source de chaleur du dispositif est un laser.

**8.** Dispositif selon l'une quelconque des revendications 1 à 7, caractérisé en ce que l'on choisit un comportement d'absorption du support d'enregistrement tel que l'on puisse stocker l'information avec un rayon laser d'une longueur d'onde et d'une intensité appropriées, et lire l'information stockée sans la détruire avec un autre rayon laser d'une autre longueur d'onde.

**9.** Dispositif selon l'une quelconque des revendications 1 à 8, caractérisé en ce que l'on provoque une variation de l'arrangement en appliquant un champ électrique ou magnétique.

**10.** Dispositif selon l'une quelconque des revendications 1 à 9, caractérisé en ce qu'un film orienté de manière macroscopique se trouve entre deux plaques ou deux films placés l'un au-dessus de l'autre.

**11.** Dispositif selon la revendication 10, caractérisé en ce que le support d'enregistrement contient une substance photosensible dont le comportement d'absorption est adapté à la longueur d'onde émise par le lecteur laser, et qui peut induire la variation locale de l'arrangement moléculaire.

**12.** Dispositif selon la revendication 11, caractérisé en ce que le comportement d'absorption du polymère est adapté à la longueur d'onde émise par le lecteur laser du fait de la liaison polymère d'une unité de comonomère photosensible.

**13.** Dispositif selon l'une quelconque des revendications 7 à 12, caractérisé en ce que l'absorption linéaire nécessaire du support d'enregistrement est réglée en fonction de la concentration en unités photosensibles.

**14.** Dispositif selon l'une quelconque des revendications 1 à 13, caractérisé en ce que la longueur d'onde pour la lecture est en dehors du domaine du maximum d'absorption nécessaire à la substance photosensible pour le processus d'écriture.

**15.** Procédé de stockage optique et réversible d'informations, caractérisé en ce que, en partant de structures matérielles reproductibles, on soumet la structure à stocker à une source lumineuse cohérente, on enregistre par holographie et on stocke dans un dispositif contenant un film à base de polymère amorphe comme support d'enregistrement, conforme aux revendications 1 à 14, le modèle d'interférence, qui est déterminé par la direction, l'amplitude et la situation de phase de la lumière dispersée par la structure à stocker, en comparaison avec une onde lumineuse de référence émise par la même source lumineuse.

**16.** Procédé selon la revendication 15, caractérisé en ce que la source lumineuse émet une lumière monochromatique cohérente.

**17.** Procédé selon la revendication 16, caractérisé en ce que, pour la lecture des informations stockées optiquement et analogiquement, on soumet le film orienté de manière macroscopique à une source lumineuse cohérente.

**18.** Procédé de stockage optique réversible d'informations, caractérisé en ce que, pour le stockage, on produit, au moyen d'un rayon laser de section choisie, une structure digitale de phases ou d'amplitudes dans un film orienté de manière macroscopique jouant le rôle de support d'enregistrement dans un dispositif conforme aux revendications 1 à 14.

**19.** Procédé selon la revendication 7, caractérisé en ce que, lors du stockage comme lors de la lecture des informations, on déplace de manière relative et définie le rayon laser et le support d'enregistrement l'un par rapport à l'autre.

**20.** Procédé selon la revendication 19, caractérisé en ce que, lors du stockage, au cours du mouvement relatif, on module de façon appropriée l'intensité du rayon laser.

**21.** Procédé selon la revendication 20, caractérisé en ce que, lors du processus de stockage digital, on produit par une modulation d'intensité à déterminer, une structure de phases ou d'amplitudes dans le support d'enregistrement, et la reproduction se fait en soumettant l'hologramme synthétique obtenu à une onde lumineuse de référence.

**22.** Procédé selon la revendication 21, caractérisé en ce que la modulation d'intensité nécessaire pour la création de la structure de phases est déterminée par le calcul.

**23.** Procédé selon l'une quelconque des revendications 17 à 22, caractérisé en ce que la densité d'informations (exprimée en lignes par unité de longueur) par rapport aux trois axes de coordonnées, est limitée d'une part, par les dimensions linéaires du support d'enregistrement, et d'autre part, par un maximum de 4000 lignes par mm.

**24.** Utilisation du dispositif selon l'une quelconque des revendications 1 à 14 pour le stockage optique réversible d'informations.

**25.** Utilisation du dispositif selon l'une quelconque des revendications 1 à 14 pour le traitement optique des signaux.

**26.** Utilisation du dispositif selon la revendication 25 pour transformation et développement en série de Fourier.

**27.** Utilisation du dispositif selon l'une quelconque des revendications 1 à 14 pour la création de systèmes de reproduction.

**28.** Utilisation du dispositif selon l'une quelconque des revendications 1 à 14 pour la création et le stockage d'hologrammes ayant des propriétés de reproduction similaires à celles des lentilles.

**29.** Utilisation du dispositif selon l'une quelconque des revendications 1 à 14 dans la technique de corrélation optique cohérente.

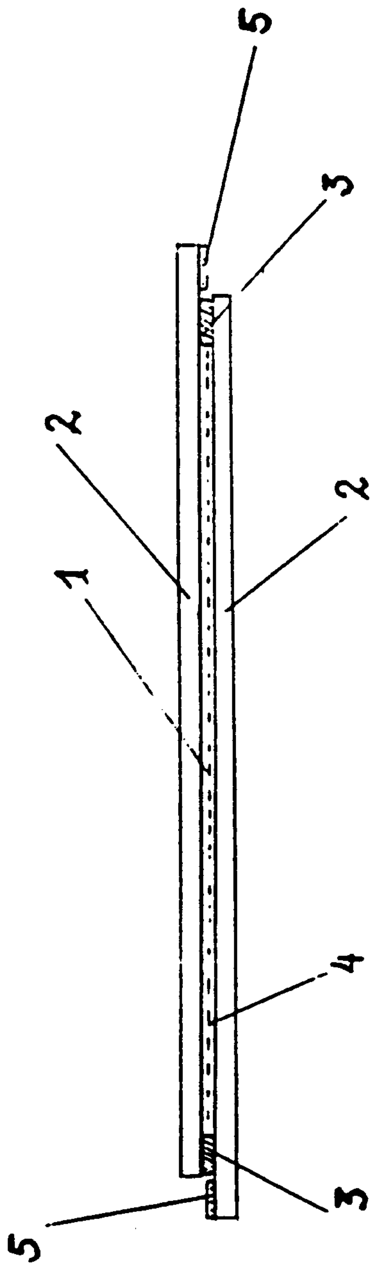


FIG. 1

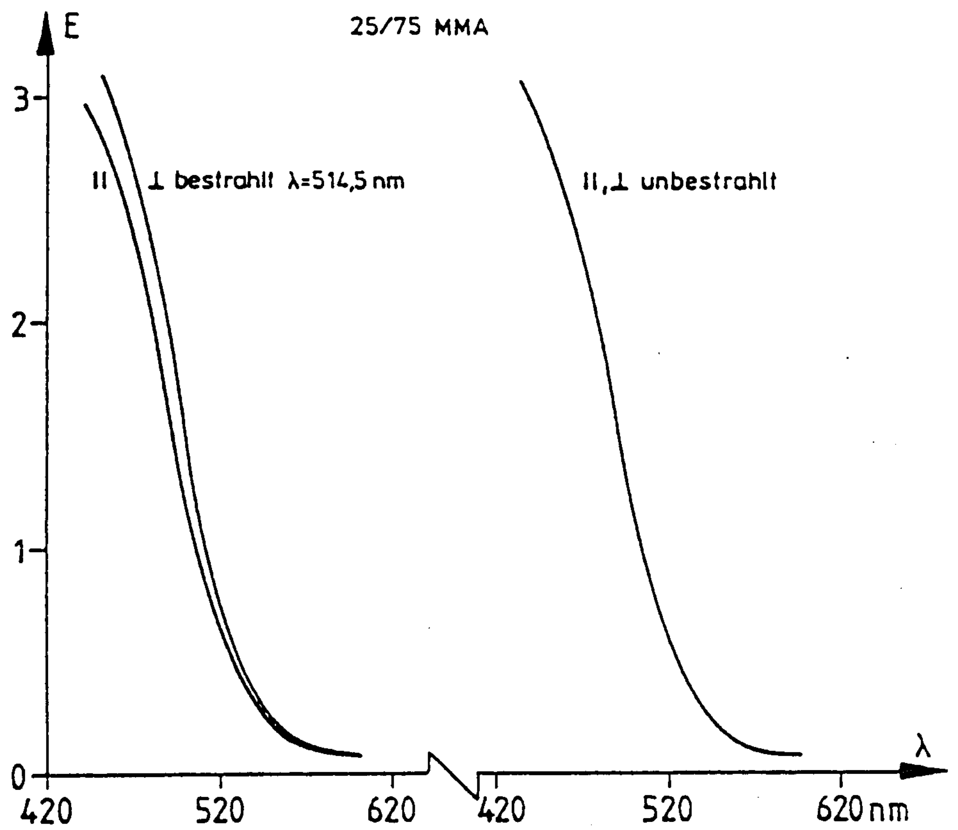


Fig. 2. Optisch induzierterDichroismus in amorphen Polymeren
$I = 20\ mW/cm^2,\ t_{exp} = 3\ min$

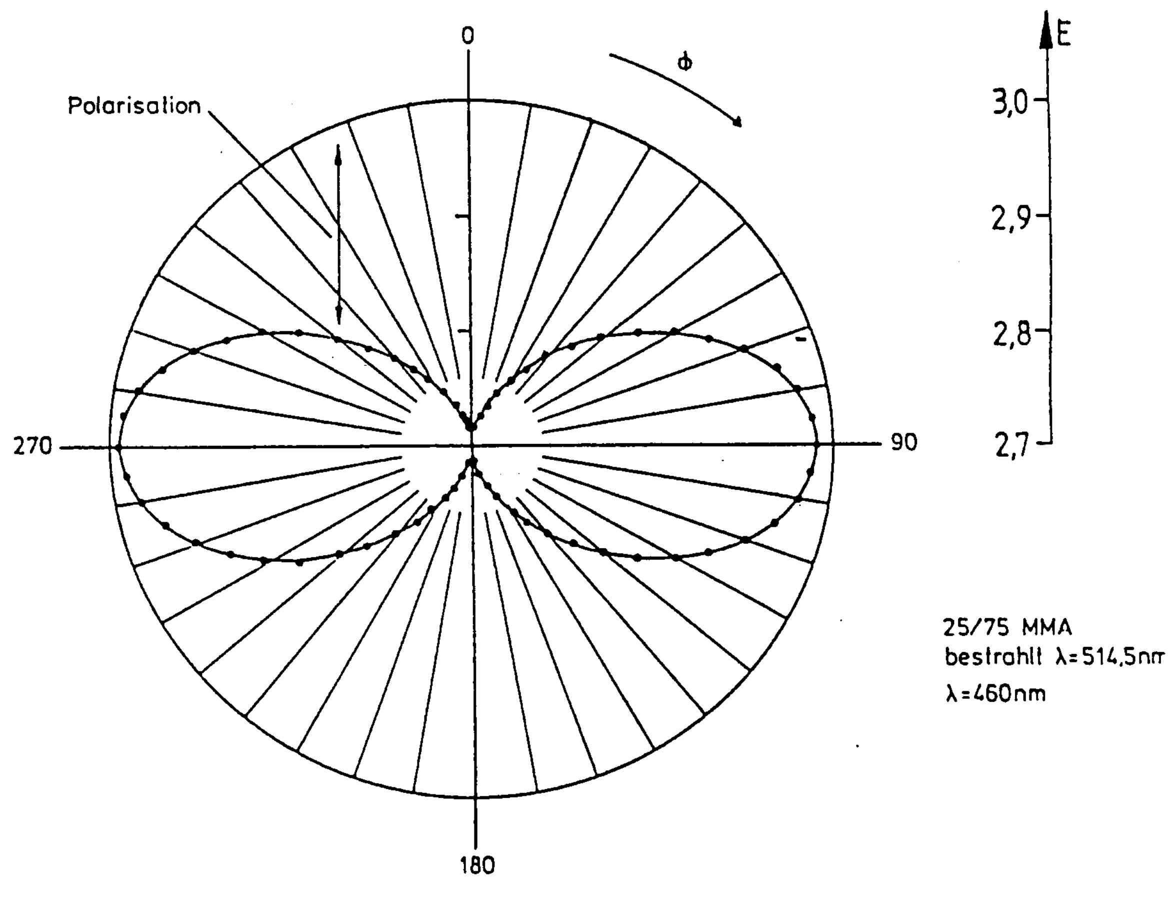


**Fig.3: Extinktion als Funktion des Polarisationswinkels in AM-P1**